## Europäisches Patentamt
## European Patent Office
## Office européen des brevets

(11) Publication number: **0 046 413**
**B1**

(12) **EUROPEAN PATENT SPECIFICATION**

(45) Date of publication of patent specification: **05.06.85**

(51) Int. Cl.⁴: **B 41 M 5/24, B 41 M 5/26, G 11 B 7/24**

(21) Application number: **81303787.6**

(22) Date of filing: **19.08.81**

(54) **Recording medium.**

(30) Priority: **20.08.80 JP 113510/80**

(43) Date of publication of application:
**24.02.82 Bulletin 82/08**

(45) Publication of the grant of the patent:
**05.06.85 Bulletin 85/23**

(84) Designated Contracting States:
**DE FR GB NL**

(56) References cited:
**DE-A-1 571 816
DE-A-1 930 930
DE-A-2 826 122
DE-A-3 011 690**

(73) Proprietor: **Hitachi, Ltd.
5-1, Marunouchi 1-chome
Chiyoda-ku Tokyo 100 (JP)**

(72) Inventor: **Mitsuya, Munehisa
2-32-C206 Koyasu-cho
Hachioji-shi Tokyo (JP)**
Inventor: **Terao, Motoyasu
2196-383 Hirai Hinodemachi
Nishitama-gun Tokyo (JP)**
Inventor: **Ota, Sakae
2142 Kamikurata-cho Totsuka-ku
Yokohama-shi Kanagawa-ken (JP)**
Inventor: **Taniguchi, Yoshio
1-4-30 Higashi-hirayama
Hino-shi Tokyo (JP)**
Inventor: **Kaku, Toshimitsu
2-32-D104 Koyasu-cho
Hachioji-shi Tokyo (JP)**
Inventor: **Horigome, Shinkichi
7-52-13 Sunagawa-cho
Tachikawa-shi Tokyo (JP)**

(74) Representative: **Paget, Hugh Charles Edward
et al
MEWBURN ELLIS & CO. 2/3 Cursitor Street
London EC4A 1BQ (GB)**

## Description

This invention relates to a recording medium having information recorded thereon, more particularly to a recording medium having a thin recording film on a substrate the information being constituted by a pattern in the film. In order to record information, the thin film is selectively vaporized and removed, or deformed by heat produced either directly by projecting a recording beam such as laser beam onto the film or indirectly via auxiliary means.

In Japanese Laid-open Patent Application No. 55—126480, Japanese Laid-open Utility Model Application No. 56—39270 and Japanese Utility Model Application No. 55—1218, some of the present inventors have proposed a recording medium in which at least one layer of an inorganic material is directly overlaid with an organic material recording layer of low melting point or softening point. In use, the inorganic material layer absorbs the recording beam and heat so produced deforms the recording layer to effect recording. However, the recording films in this structure, especially when of high sensitivity, has been found to have the disadvantage of low heat tolerance. Defects in the organic material layer are caused by slight temperature changes.

"DE—A—2826122 discloses a recording medium having an organic recording layer formed of metal salts of organic acids on an inorganic layer, and an organic protective layer on top of the recording layer. The protective layer is removed with the recording layer, when information is recorded".

An object of this invention is to provide a recording medium whose performance is less affected by a change in the ambient temperature.

The invention is defined in the claims.

A general description of the invention and Examples thereof will now be given with reference to the accompanying drawings, in which:—

Figures 1, 2 and 3 are diagrammatic sectional views of a recording medium Figure 3 showing the recording film according to this invention having information recorded thereon,

Figure 4 is a graph illustrative of recording energy characteristics, and

Figures 5 and 6 are graphs illustrative of the variations of the S/N (signal-to-noise) ratio versus time.

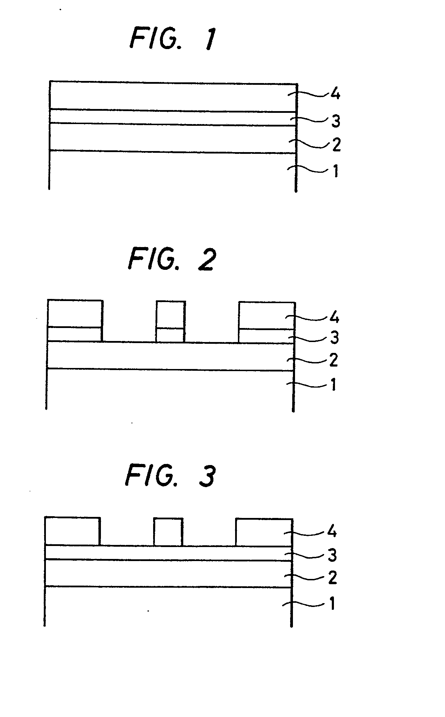

Fundamentally, the recording medium of this invention prior to the recording of the information, has a sectional structure which can be diagrammatically exemplified as in Figure 1. This recording medium has an inorganic material layer 2, a first (intermediate) organic material layer 3 and a second (recording) organic material layer 4 formed in that sequence on a substrate 1. A beam projected onto the recording medium from either the substrate side or the organic material layer side is absorbed by the inorganic material layer, and one or both organic material layers is/are melted by heat so produced.

Although the power of the beam is also a factor, both the first and second organic material layers 3, are usually melted if the melting point of the first layer 3 is low. The condition thus produced is illustrated in Figure 2. Only the second layer 4 is melted if the melting point of the first organic material layer is high. The condition thus produced is illustrated in Figure 3, which thus illustrates the present invention. If the first layer 3 is relatively thin, it hardly affects the reflectivity even when it is left behind and accordingly the intensity of the reproduced signal is little affected.

Although, in the above description, the deformation of the organic material layer has been said to result from melting, vaporization may occur in some cases.

The inorganic material layer 2 may be made of any material which absorbs light and so generates heat, and is stable. Semiconductor laser devices have been employed as the recording beam source for such recording media in recent years, so that it is preferable to employ an inorganic material of the general formula of $A_xB_y$ (where A is at least one of In, Bi, Te, Sb, Pb, Ge and Sn, B is at least one of S, Se and O, and $65 \leq x \leq 100$ and $0 \leq y \leq 35$ in terms of the atomic percent), as described in Japanese Laid-open Patent Application No. 55—126480. Materials of this kind behave satisfactorily when exposed to a laser beam. The thickness of the inorganic material layer is preferably in the range 20—300 nm more preferably 30—60 nm. If this thickness is too small, the desired effect is not achieved. If the thickness is unnecessarily large, conduction of heat laterally increases resulting in reduced sensitivity.

The recording medium preferably has a second inorganic material layer on the aforesaid inorganic material layer or between it and the first organic material layer, the material of the second inorganic material layer having the general formula of $D_sE_t$ (where D is at least one of In, Bi, Te, Sb, Pb, Ge and Sn, E is at least one of S, Se and O, $25 \leq s \leq 60$ and $40 \leq t \leq 75$ in terms of atomic percent).

The first function of the second inorganic material layer is, by creating a difference in material composition between the first inorganic material layer and this second inorganic material layer, to prevent the surface of the first inorganic material layer from melting or oxidizing. A second function is to provide a large reproduced signal when reading out a recorded information. These functions of the second inorganic material layer are described in detail in Japanese Laid-open Patent Application No. 55—126480. The thickness of the second inorganic material layer is preferably in the range of 10—300 nm, more preferably 15—40 nm. These ranges are specified for the same reasons as the ranges preferred for the thickness of the first inorganic material layer.

When materials of the formulae given above are employed for the first and second inorganic material layers, they represent a combination of the same kind of materials having unequal composition percentages. By means of the chosen composition percentages, the characteristics of the respective layers can be enhanced. For example, when the first inorganic material layer is made of material of the general formula $A_xB_y$, the absorption of light can be increased. On the other hand, a high thermal conductivity reduces the sensitivity, so that the material is preferably chosen so that its thermal conductivity is below approximately 1 W/cm. degree at normal temperature.

However, the first inorganic material layer is not restricted to materials of the composition given above. A large number of materials including CdS, CdSe are known to generate heat when subjected to a recording beam and these can also be employed. However, they are generally inferior in recording sensitivity to materials of general formula given above.

Preferably, the first organic material layer contains at least one metal selected from Li, Na, K, Rb, Cs, Cu, Ag, Be, Mg, Ca, Sr, Ba, Zn, Cd, Hg, B, Al, Ga, Ge, Sn, Pb, Co, Fe, Ni, Cr, Ti and Mn. Such metals may be present in the form of metal salts of organic acids, e.g. metal salts of carboxylic acids such as capric acid, lauric acid, palmitic acid, stearic acid and phthalic acid, sulfonic acids such as methene-sulfonic acid, benzenesulfonic acid, p-toluenesulfonic acid and 1-naphthalenesulfonic acid; sulfinic acids such as benzene-sulfinic acid and p-toluenesulfinic acid; and organic acids in a broad sense such as phenol, enol and thiophenol.

Secondly, alkoxides, for example aluminum alkoxide and calcium alkoxide may be employed.

Thirdly, organometal compounds, for example bisbenzenechromium and alkyltitanium compounds, may be employed.

Among these materials, metal salts of the organic acids are most preferred because of their high stabilities.

It is desirable that the material of the first organic material layer has a melting point or a softening point in the range 60°C to 400°C.

The preferred thickness of the first organic material layer is in the range 1—50 nm, especially 2—10 nm.

When only the first organic material layer is present, a satisfactory recording film is not formed, because if the first organic material layer has the thickness of at least 20 nm required for the recording film, a suitably smooth film cannot be obtained, and because when the first organic material layer is not overlaid with the second organic material layer, defects are liable to develop in the film.

The second organic material layer may be one more of the following compounds:

hydrocarbons, for example octacosane, dotriacontane, hexatriacontane and hexaethylbenzene;

halogenides of hydrocarbons, for example milissylchloride and 1,2-diiodoethylene;

alcohols, for example cerotyl alcohol and tripropynylcarbinol;

esters of alcohols, for example melissic acid methylester;

aldehydes, for example metapropionaldehyde;

ketones, for example palmitone, stearone and β-phenylbutyrophenone;

nitro or nitroso compounds, for example 2,2-dinitro-1,3-propanediol;

amino compounds, for example dodecamethylene-diamine;

carboxylic acids, for example stearic acid, behenic acid, sorbic acid, cyclobutane-1,1-dicarboxylic acid and benzoic acid;

spiro compounds for example anthrone-9-spiro-1'-cyclopropane;

heterocyclic compounds, for example furan derivatives and carbazoles;

natural resins, for example natural rubber, cellulose and cellulose derivatives;

synthetic resins, for example polyethylene, ethylene-vinylacetate copolymer, polypropylene, polyvinyl chloride, polyvinylidene chloride, polyvinyl acetate, polyvinyl acetal, fluorocarbon plastics, acrylic resin, polyacrylonitrile, polystyrene, polyacetal resin and styrene-acrylonitrile copolymer; etc.

Among these organic materials, those preferred have a melting point, softening point or sublimation point not less than 60°C and not more than 200°C, more preferably at least 70°C and at most 150°C.

The preferred thickness of the second organic material layer is in the range 20—200 nm, more preferably in the range of 30—100 nm. If this layer is too thin, the intensity of the reproduced signal becomes low, and if it is too thick, the shapes of pits or recesses are disordered, and the error rate of read-out increases (the S/N (signal-to-noise) ratio decreases).

Preferably, a glass plate, a transparent plastic plate or the like is employed as the substrate. It is also possible to employ a metal substrate of aluminum or the like whose surface is coated with a thermally insulating plastics material or the like. In this case, however, the recording beam can be projected only from the second organic material layer side.

The manufacture of the inorganic material layer(s) may be by sputtering, electron-beam evaporation, vacuum evaporation or the like.

To form the organic material films there can be employed coating at a high temperature, spin coating, vacuum evaporation, sputtering, glow discharge, a method in which a monomer or a substance of low molecular weight is hardened by electron-beam irradiation, ultraviolet-ray irradiation or heating during or after the evaporation thereof, or the like. The absorption of light may well be increased by co-evaporation with an inorganic matter or by simultaneous rotating-evaporation.

It is also effective to enhance sensitivity that the molecular weight is reduced by electron-beam irradiation, ultraviolet ray irradiation or the like after the organic substance film has been formed. Furthermore, the first organic material layer may well be formed by the process for manufacturing a built-up film. If the substrate is provided with a guide groove, it is favourable to employ the evaporation process, the plasma polymerization process or the like.

If the melting point of the first organic material layer is low, it is also effective to increase the intensity of the reproduced signal that the material composition gradually changes between the first organic material layer and the second organic material layer. This can be achieved by, for example, vacuum-evaporation first a substance to form the first organic material layer, subsequently both this material and a material which is to form the second organic material layer and lastly only the latter material.

To enhance stability against change in the ambient temperature, the second organic material layer is preferably overlaid with a third organic material layer of higher in the melting point than the second layer. Preferred as the material of the third organic material layer is an organic polymer whose melting point is higher than that of the second organic material layer. For example, polymethylmethacrylate, polyethylene or the like. It is preferable that the thickness of the third organic material layer is at least 1 nm and is not greater than the thickness of the second organic material layer.

Example 1

A disc of chemically-reinforced glass having a diameter of 31 cm and a thickness of 1.1 mm was rotated about its axis at 120 rpm. Onto the disc, Bi was evaporated to a film thickness of 50 nm, and $Sb_2S_3$ was subsequently evaporated to a film thickness of 30 nm. The reflectivity of the resultant film for the light of a semiconductor laser (wavelength 830 nm) was 72%. Zinc stearate (melting point: 140°C) was evaporated onto this film to a film thickness of 5 nm. The reflection factor was now 69.5%. Onto the resultant film, n-$C_{36}H_{74}$ (melting point: 76°C) was evaporated to a film thickness of 50 nm. This completed the recording film. The reflection factor of this film was 24%. For comparison, a recording film identical to the above except that the zinc stearate layer was omitted, was fabricated by the same method.

While each recording medium was rotated at 240 rpm, recording and reproduction were carried out with a semiconductor laser of a wavelength of 830 nm and a maximum output of 15 mW. The light was focussed so that the spot diameter on the disc was about 1 μm. The recording was carried out at a pulse width of 30—300 ns.

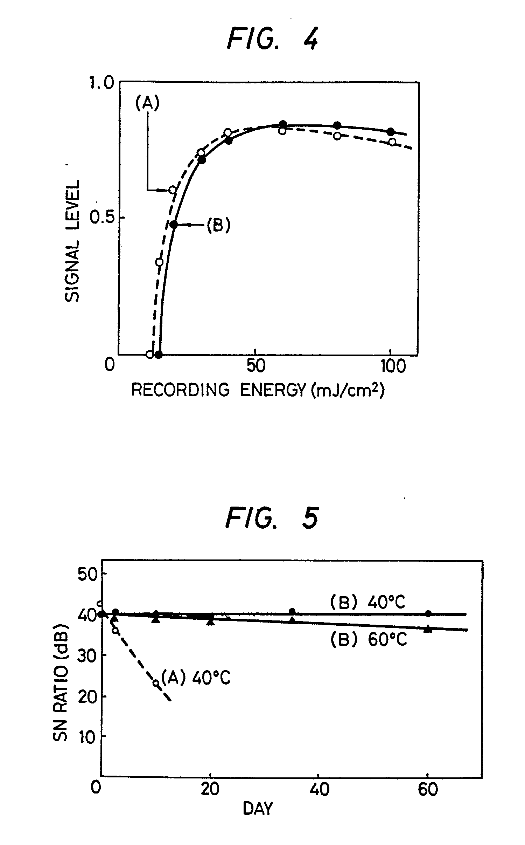

The relationships between the recording energy and the reproduced signal level at a pulse width of 50 ns are illustrated in Figure 4. Curve B is for the medium having the zinc stearate layer, while curve A is for the medium not having it.

Each of the recording members, having been written onto, was let stand in a constant-temperature oven at 40°C and at 60°C, and the variations of the S/N ratios with time were measured. The results are illustrated in Figure 5. In the absence of the zinc stearate, the S/N ratio decreases very sharply in one day in at 60°C (not plotted) and is rapidly reduced as indicated by curve A even at 40°C. In the presence of the zinc stearate, the decrease of the S/N ratio is within 10% even after 60 days at 60°C and is very small in the case of 40°C as illustrated by curves B in the graph. Accordingly, the increase rate of the error rate is small.

Example 2

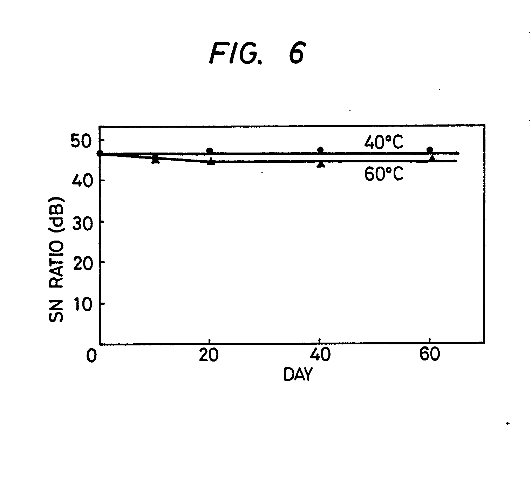

The same experiment as Example 1 was carried out except that, instead of the zinc stearate, silver stearate (melting point: 205°C) was evaporated to a film thickness of 5 nm. The results of the S/N ratio test at 40°C and 60°C are illustrated in Figure 6. The same tendencies as in Example 1 are observed, and as a whole, the S/N ratio is higher than in Example 1.

Similar results were obtained when the Mg salt, Ca salt and Pb salt of stearic acid or carpylic acid, the Zn salt of alkylbenzensulfonic acid, and calcium alkoxide were used.

**Claims**

1. A recording medium having information recorded thereon, comprising a substrate (1), an inorganic material layer (2) formed on said substrate (1) are adapted to absorb light and thereby generate heat, and an organic material recording layer (4) formed on said inorganic material layer and having a pattern constituting said recorded information formed therein by local deformation or removal by heat generated in the inorganic material layer (2), wherein an intermediate layer (3) made of an organic material containing metal is located between said inorganic material layer (1) and said recording layer (4) and is substantially not removed or deformed at the locations of removal or deformation of the recording layer (4).

2. A recording medium according to claim 1 wherein said intermediate layer (3) is made of at least one organic material selected from metal salts of organic acids, alkoxides, and organometallic compounds.

3. A recording medium according to claim 2 wherein said intermediate layer is made of at least one metal salt selected from metal salts of carboxylic acids, sulfonic acids, sulfinic acids, phenols, enols and thiophenols.

4. A recording medium according to claim 3 wherein the metal of the or each said metal salt is selected from Li, Na, K, Rb, Cs, Cu, Ag, Au, Be, Mg, Ca, Sr, Ba, Zn, Cd, Hg, B, Al, Ga, Ge, Sn, Pb, Co, Fe Ni, Cr, Ti and Mn.

5. A recording medium according to any one of claims 1 to 4, wherein said intermediate layer (3) is made of an organic material with a melting point or softening point in the range 60—400°C.

6. A recording medium according to any one of claims 1 to 5 wherein said intermediate layer (3) has a thickness in the range 1—50 nm.

7. A recording medium according to any one of the preceding claims wherein said inorganic material layer (2) is made of a material represented by the general formula $A_xB_y$, where A is at least one of In, Bi, Te, Sb, Pb, Ge and Sn, B is at least one of S, Se and O and x and y as atomic percentages are given by $65 \leq x \leq 100$ and $0 \leq y \leq 35$.

8. A recording medium according to any one of the preceding claims wherein the thickness of said inorganic material layer (2) is in the range 20—300 nm.

9. A recording medium according to any one of the preceding claims wherein said recording layer (4) is made of an organic material with melting or softening point in the range 60—200°C.

10. A recording medium according to any one of the preceding claims wherein said recording layer (4) is made of at least one material selected from hydrocarbons, halogen derivatives of hydrocarbons, alcohols, esters, aldehydes, ketones, nitro compounds, nitroso compounds, amino compounds, carboxylic acids, spiro compounds, heterocyclic compounds, natural resins and synthetic resins.

11. A recording medium according to any one of the preceding claims wherein said recording layer (4) has a thickness in the range 20—200 nm.

12. A recording medium according to any one of the preceding claims wherein an inorganic material intermediate layer is located between said inorganic material layer (2) and said organic material intermediate layer, said inorganic material intermediate layer being made of a material represented by the general formula of $D_sE_t$, where D is at least one of In, Bi, Te, Sb, Pb, Ge and Sn, E is at least one of S, Se and O and s and t as atomic percentages are given by $25 \leq s \leq 60$ and $40 \leq t \leq 75$.

13. A recording medium according to claim 12, wherein said inorganic material intermediate layer has a thickness in the range 10—300 nm.

14. A recording medium according to any one of the preceding claims wherein a third organic material layer is formed on said recording layer (4), said third organic material layer being made of an organic material which has a melting or softening point higher than the melting or softening point of the material of said recording layer (4).

15. A recording medium according to claim 14 wherein said third organic material layer has a thickness of at least 1 nm but not more than that of said recording layer (4).

**Patentansprüche**

1. Aufzeichungsmedium mit darauf aufgezeichneter Information, das ein Substrat (1), eine Schicht (2) aus anorganischem Material, die auf dem Substrat (1) gebildet und so ausgelegt ist, daß sie Licht absorbiert und dadurch Wärme erzeugt, sowie eine Aufzeichnungsschicht (4) aus organischem Material aufweist, die auf der Schicht aus anorganischem Material gebildet ist und ein Muster hat, das die aufgezeichnete Information aufbaut, die darin durch lokale Deformation oder durch Entfernung aufgrund der in der Schicht (2) aus anorganischem Material erzeugten Wärme gebildet ist, wobei eine Zwischenschicht (3), die aus einem Metall enthaltenden organischen Material hergestellt ist, zwischen der Schicht (2) aus anorganischem Material und der Aufzeichnungsschicht (4) liegt und an den Stellen der Entfernung oder Deformation der Aufzeichnungsschicht (4) im wesentlichen nicht entfernt oder deformiert ist.

2. Aufzeichnungsmedium nach Anspruch 1, wobei die Zwischenschicht (3) zumindest aus einem organischen Material hergestellt ist, das aus Metallsalzen von organischen Säuren, Alkoxiden und organometallischen Verbindungen gewählt ist.

3. Aufzeichnungsmedium nach Anspruch 2, wobei die Zwischenschicht zumindest aus einem Metallsalz hergestellt ist, das aus Metallsalzen von Carbonsäuren, Sulforsäuren Sulfinsäuren, Phenolen, Enolen und Thiophenolen gewählt ist.

4. Aufzeichnungsmedium nach Anspruch 3, wobei das Metall des oder jedes Metallsalz aus Li, Na, K, Rb, Cs, Cu, Ag, Au, Be, Mg, Ca, Sr, Ba, Zn, Cd, Hg, B, Al, Ga, Ge, Sn, Pb, Co, Fe, Ni, Cr, Ti und Mn gewählt ist.

5. Aufzeichnungsmedium nach einem der Ansprüche 1 bis 4 wobei die Zwischenschicht (3) aus einem organischen Material mit einem Schmelpunkt oder Erweichungspunkt im Bereich von 60 bis 400°C hergestellt ist.

6. Aufzeichnungsmedium nach einem der Ansprüche 1 bis 5, wobei die Zwischenschicht (3) eine Dicke im Bereich von 1 bis 50 nm hat.

7. Aufzeichnungsmedium nach einem der vorhergehenden Ansprüche, wobei die Schicht (2) aus anorganischem Material aus einem Material hergestellt ist, das durch die allgemeine Formel $A_xB_y$ angegeben ist, worin A zumindest eines von I, Bi, Te, Sb, Pb, Ge und Sn ist, B zumindest eines von S, Se und O ist, und x und y als Atom-Prozentgehalte durch $65 \leq x \leq 100$ und $0 \leq y \leq 35$ gegeben sind.

8. Aufzeichnungsmedium nach einem der vorhergehenden Ansprüche, wobei die Dicke der Schicht (2) aus anorganischem Material im Bereich von 20 bis 300 nm liegt.

9. Aufzeichnungsmedium nach einem der vorhergehenden Ansprüche, wobei die Aufzeichnungsschicht (4) aus einem organischen Material mit einem Schmelz- oder Erweichungspunkt im Bereich von 60 bis 200°C hergestellt ist.

10. Aufzeichnungsmedium nach einem der vorhergehenden Ansprüche, wobei die Aufzeichnungsschicht (4) zumindest aus einem Material hergestellt ist, das gewählt ist aus Kohlenwasserstoffen, Halogenderivaten von Kohlenwasserstoffen, Alkoholen, Estern, Aldehyden, Ketonen, Nitroverbindungen, Nitrosoverbindungen, Aminoverbindungen, Carbonsäuren, Spiroverbindungen, heterozyklischen Verbindungen, Naturharzen und Kunstharzen.

11. Aufzeichnungsmedium nach einem der vorhergehenden Ansprüche, wobei die Aufzeichnungsschicht (4) eine Dicke im Bereich von 20 bis 200 nm hat.

12. Aufzeichnungsmedium nach einem der vorhergehenden Ansprüche, wobei zwischen der Schicht (2) aus anorganischem Material und der Zwischenschicht aus organischem Material eine Zwischenschicht aus anorganischem Material liegt, die aus einem durch die allgemeine Formel $D_sE_t$ angegebenem Material hergestellt ist, worin D zumindest eines von In, Bi, Te, Sb, Pb, Ge und Sn ist, E zumindest eines von S, Se und O ist, und s und t als utom -Prozentgehalte durch $25 \leq s \leq 60$ und $40 \leq t \leq 75$ gegeben sind.

13. Aufzeichnungsmedium nach Anspruch 12, wobei die Zwischenschicht aus anorganischem Material eine Dicke im Bereich von 10 bis 300 nm hat.

14. Aufzeichnungsmedium nach einem der vorhergehenden Ansprüche, wobei auf der Aufzeichnungsschicht (4) eine dritte Schicht aus organischem Material gebildet ist, die aus einem organischen Material hergestellt ist, das einen Schmelz- oder Erweichungspunkt hat, der höher als der Schmelz- oder Erweichungspunkt des Materials der Aufzeichnungsschicht (4) ist.

15. Aufzeichnungsmedium nach Anspruch 14, wobei die dritte Schicht aus organischem Material eine Dicke von zumindest 1 nm, jedoch nicht höher als die der Aufzeichnungsschicht (4) hat.

**Revendications**

1. Support d'enregistrement dans lequel est enregisté un information, comprenant un substrat (1), une couche (2) en un matériau inorganique, formée sur ledit substrat (1) et apte à absorber la lumière et à produire de ce fait de la chaleur, et une couche d'enregistrement (4) en un matériau organique formée sur ladite couche en matériaus inorganique et dans laquelle est formée une image constituant ladite information enregistrée par déformation ou élimination locale sous l'effet de la chaleur produite dans la couche (2) en matériau inorganique, dans lequel une couche intermédiaire (3) constituée en matériau organique contenant un métal est située entre ladite couche (2) en matériau inorganique et ladite couche d'enregistrement (4) et est pour l'essentiel non éliminée ou non déformée aux emplacements d'enlèvement ou de déformation de la couche d'enregistrement (4).

2. Support d'enregistrement selon la revendication 1, dans lequel ladite couche intermédiaire (3) est constituée par au moins un matériau organique sélectionné parmi les sels métalliques d'acides organiques, des alkoxydes et des composés organo-métalliques.

3. Support d'enregistrement selon la revendication 2, dans lequel ladite couche intermédiaire est constituée par au moins un sel métallique choisi parmi les sels métalliques d'acide caboxylique, d'acides sulfoniques, d'acides sulfiniques, de phénols, d'énols et de thiophénols.

4. Support d'enregistrement selon la revendication 3, dans lequel le métal où le ou chaque sel métallique est choisi parmi Li, Na, K, Rb, Cs, Cu, Ag, Au, Be, Mg, Ca, Sr, Ba, Zn, Cd, Hg, B, Al, Ga, Ge, Sn, Pb, Co, Fe, Ni, Cr, Ti et Mn.

5. Support d'enregistrement selon l'une quelconque des revendications 1 à 4, dans lequel ladite couche intermédiaire (3) est constituée en un matériau organique possédant un point de fusion ou un point de ramollissement situé dans la gamme allant de 60 à 400°C.

6. Support d'enregistrement selon l'une quelconque des revendications 1 à 5, dans lequel ladite couche intermédiaire (3) possède une épaisseur comprise dans la gamme allant de 1 à 50 nm.

7. Support d'enregistrement selon l'une quelconque des revendications précédentes, dans lequel ladite couche en matériau inorganique (2) est constituée en un matériau correspondant à la formule générale $A_x, B_y$, dans laquelle A est au moins un des éléments In, Bi, Te, Sb, Pb, Ge, et Sn, et B est au moins l'un des éléments S, Se et O et x et y, qui sont des pourcentages d'atomes, sont donnés par les relations $65 \leq x \leq 100$ et $0 \leq y \leq 35$.

8. Support d'enregistrement selon l'une quelconque des revendications précédentes, dans lequel l'épaisseur de ladite couche (2) en matériau inorganique est comprise dans la gamme allant de 20 à 300 nm.

9. Support d'enregistrement selon l'une quelconque des revendications précédentes, dans laquelle ladite couche d'enregistrement (4) est constituée en un matériau organique possédant un point de fusion ou de ramollissement située dans la gamme allant de 60 à 200°C.

10. Support d'enregistrement selon l'une quelconque des revendications précédentes, dans lequel ladite couche d'enregistrement (4) est constituée par au moins l'un des matériaux sélectionnés parmi des hydrocarbures, des dérivés halogénés d'hydrocarbures, des alcools, des esters, des aldéhydes, de cétones, des composés nitro, des composés nitroso, des composés amino, des acides carboxyliques, des composés spiro, des composés hétérocycliques, des résines naturelles et des résines synthétiques.

11. Support d'enregistrement selon l'une des revendications précédentes, dans lequel ladite couche d'enregistrement (4) possède une épasseur située dans la gamme allant de 20 à 200 nm.

12. Support d'enregistrement selon l'une quelconque des revendications précédentes, dans lequel une couche intermédiaire en un matériau inorganique est située entre ladite couche (2) en matériau inorganique et ladite couche intermédiaire en matériau inorganique, ladite couche intermédiaire en matériau inorganique étant constituée par un matériau correspondant à la formule générale $D_sE_t$, dans laquelle D est au moins l'un des éléments In, Bi, Te, Sb, Pb, Ge et Sn, et E est au moins l'une des éléments S, Se, et O et s et t, en tant que pourcentages d'atomes sont fournis par les relations 25≤s≤60 et 40≤t≤75.

13. Support d'enregistrement selon la revendication 12, dans lequel ladite couche intermédiaire en matériau inorganique possède une épasseur située dans la gamme allant de 10 à 300 nm.

14. Support d'enregistrement selon l'une quelconque des revendications précédentes, dans lequel une troisième couche en matériau organique est formée sur ladite couche d'enregistrement (4), ladite troisième couche en matériau organique étant constitué en un matériau organique qui possède un point de fusion ou un point de ramolissement inférieur au point de fusion ou au point de ramollissement du matériau de ladite couche d'enregistrement (4).

15. Support d'enregistrement selon la revendication 14, dans lequel ladite troisième couche en matériau organique possède une épaisseur égale à au moins 1 nm, mais non supérieur à celle de ladite couche d'enregistrement (4).

## FIG. 1

4
3
2
1

## FIG. 2

4
3
2
1

## FIG. 3

4
3
2
1

## FIG. 4

## FIG. 5

## FIG. 6